(19) Europäisches Patentamt
European Patent Office
Office européen des brevets

(11) Veröffentlichungsnummer: **0 269 821 B1**

(12) **EUROPÄISCHE PATENTSCHRIFT**

(45) Veröffentlichungstag der Patentschrift: **01.04.92**

(51) Int. Cl.$^5$: **G02B 6/10**, B29D 11/00

(21) Anmeldenummer: **87115305.2**

(22) Anmeldetag: **20.10.87**

(54) **Lichtwellenleiter.**

(30) Priorität: **25.10.86 DE 3636399**

(43) Veröffentlichungstag der Anmeldung:
**08.06.88 Patentblatt 88/23**

(45) Bekanntmachung des Hinweises auf die Patenterteilung:
**01.04.92 Patentblatt 92/14**

(84) Benannte Vertragsstaaten:
**BE DE FR GB IT**

(56) Entgegenhaltungen:
**EP-A- 0 097 325**
**EP-A- 0 128 516**
**US-A- 425 824**
**US-A- 4 681 400**

**CHEMICAL ABSTRACTS, Band 98, Nr. 22, 30. Mai 1983, Seite 51, Zusammenfassungsnr. 180683, Columbus, Ohio, US; & JP - A - 57 188 354**

**PATENT ABSTRACTS OF JAPAN, Band 10, Nr. 67 (C-333)[2124], 15. März 1986; & JP - A - 60 204 744**

(73) Patentinhaber: **HOECHST AKTIENGESELLSCHAFT**
**Postfach 80 03 20**
**W-6230 Frankfurt am Main 80(DE)**

(72) Erfinder: **Wieners, Gerhard, Dr.**
**Unterweg 17**
**W-6000 Frankfurt am Main(DE)**
Erfinder: **Heumüller, Rudolf, Dr.**
**Sodener Weg 1**
**W-6232 Bad Soden am Taunus(DE)**
Erfinder: **Coutandin, Jochen, Dr.**
**Friedenstrasse 3**
**W-6551 Bretzenheim(DE)**
Erfinder: **Groh, Werner, Dr.**
**Geisenheimer Strasse 93**
**W-6000 Frankfurt am Main 71(DE)**
Erfinder: **Herbrechtsmeier, Peter, Dr.**
**Friedrich-Stolze-Strasse 10**
**W-6240 Königstein/Taunus(DE)**

**EP 0 269 821 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf Lichtwellenleiter, welche sich für die Übermittlung von Lichtsignalen eignen. Diese Lichtwellenleiter besitzen eine hohe Wärmestandfestigkeit.

Fadenförmige Lichtwellenleiter bestehen aus einem transparenten Material und setzen sich meist aus einem Kern und einem Mantel zusammen, wobei das Kernmaterial immer einen höheren Brechungsindex hat als das Mantelmaterial. Außerdem sollen Kernmaterial und Mantelmaterial so wenig Licht wie möglich absorbieren.

Die bisher für Lichtwellenleiter am häufigsten eingesetzten polymeren Materialien sind Homo- und Copolymere des Methylmethacrylats. Während für den Kern auch halogenhaltige Polymere eingesetzt wurden, wurden für den Mantel bislang fluorhaltige Polymere verwendet, weil sie einen niedrigeren Brechungsindex aufweisen. Zur Verminderung der Lichtabsorption ist auch schon vorgeschlagen worden, die Wasserstoffatome in den Monomeren und Polymeren durch Deuterium zu ersetzen.

Bekannt sind Copolymere aus Trifluormethacrylsäureester und Styrol oder substituierten Styrolen, beispielsweise halogenhaltigem Styrol (vgl. DE-OS 3 518 617). Die Copolymeren werden u.a. als Mantelmaterial für optische Fasern verwendet.

Weiterhin ist auch ein Lichtwellenleiter beschrieben worden, dessen Kernmaterial durch Blockpolymerisation von u.a. halogenierten Arylmethacrylat, beispielsweise Pentafluorphenyl-methacrylat hergestellt wird (vgl. JP-OS 60-242 404). Als Mantelmaterial werden Copolymere von Vinylidenfluorid, Tetrafluorethylen und Hexafluorpropylen eingesetzt.

Die vorgenannten Polymeren ergeben jedoch für bestimmte Einsatzgebiete keine Lichtwellenleiter mit ausreichender Wärmestandfestigkeit.

Es wurde nun gefunden, daß man Lichtwellenleiter mit sehr guter Wärmestandfestigkeit und guter Lichtleitfähigkeit erhält, wenn Kern und Mantel aus Polymeren bestehen, welche sich von halogenierten Phenylacrylaten oder Phenylmethacrylaten ableiten.

Die Erfindung betrifft somit einen faserförmigen Lichtwellenleiter, bestehend aus einem transparenten thermoplastischen Kunststoff, dadurch gekennzeichnet, daß der Kunststoff ein Polymer ist, das im wesentlichen Einheiten enthält, die sich von einem Ester der Formel (I) ableiten,

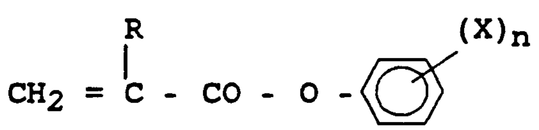

(I)

in der R ein Wasserstoffatom, ein Fluoratom oder eine Methylgruppe, X ein Chloratom oder ein Bromatom und n eine ganze Zahl von 1 bis 5 bedeuten.

In der Formel (I) ist R vorzugsweise ein Fluoratom oder eine Methylgruppe, insbesondere eine Methylgruppe,
X ist vorzugsweise Brom,
n ist vorzugsweise 3, 4 oder 5, insbesondere 5.
Beispiele für erfindungsgemäß einzusetzende Verbindungen der Formel (I) sind:
Chlorphenylacrylat, Trichlorphenylacrylat, Tetrachlorphenylacrylat, Pentachlorphenylacrylat, Chlorphenyl-fluoracrylat, Trichlorphenyl-fluoracrylat, Tetrachlorphenyl-fluoracrylat, Pentachlorphenyl-fluoracrylat, Chlorphenylmethacrylat, Trichlorphenylmethacrylat, Tetrachlorphenylmethacrylat, Pentachlorphenylmethacrylat, Bromphenylacrylat, Dibromphenylacrylat, Tetrabromphenylacrylat, Pentrabromphenylacrylat, Bromphenylfluoracrylat, Tribromphenyl-fluoracrylat, Tetrabromphenyl-fluoracrylat, Pentabromphenyl-fluoroacrylat, Bromphenylmethacrylat, Tribromphenylmethacrylat, Tetrabromphenylmethacrylat, Pentabromphenylmethacrylat.

Bevorzugt eingesetzt von diesen Monomeren werden Pentachlorphenylacrylat, Pentachlorphenyl-fluoracrylat, Pentachlorphenylmethacrylat, Pentabromphenylacrylat, Pentabromphenyl-fluoracrylat, Pentabromphenylmethacrylat, besonders bevorzugt Pentachlorphenylmethacrylat und Pentabromphenylmethacrylat, insbesondere Pentabromphenylmethacrylat.

Die Monomeren können in bekannter Weise durch Umsetzung von Acryloylhalogenid, α-Fluoracryloylhalogenid oder Methacryloylhalogenid mit einem (Poly)Halogenphenol hergestellt werden.

Weiterhin sind in den Polymeren Einheiten enthalten, welche sich beispielsweise von den folgenden Monomeren ableiten:
Alkylacrylate, Alkylmethacrylate, Styrol, α-Methylstyrol, Vinylchlorid und andere halogenhaltige Monomere, Maleinsäureanhydrid, Acrylsäure, Acrylnitril.

Bevorzugt sind Methylmethacrylat, Styrol, Hexafluorisopropylmethacrylat, Acrylnitril und Acrylsäure.

Die aus den genannten Monomeren durch radikalische Massepolymerisation hergestellten Polymeren bestehen zu 5 bis 100 Gew.-%, vorzugsweise 50 bis 100 Gew.-%, insbesondere 55 bis 95 Gew.-%, aus Einheiten, welche sich von Verbindungen der Formel (I) ableiten. Bis zu 95 Gew.-%, vorzugsweise bis zu 50 Gew.-%, insbesondere 5 bis 45 Gew.-% Einheiten leiten sich von den Monomeren der zweiten Gruppe ab.

Die Polymeren sind transparent und bilden das Material für die Herstellung von Lichtwellenleitern, welche aus Kern und Mantel bestehen können. Dabei kann das Polymere für den Mantel der Lichtwellenleiter aus den gleichen Monomeren aufgebaut sein wie das Polymere für den Kern. Der Halogengehalt im Mantelpolymeren muß jedoch so gewählt werden, daß der Brechungsindex des Mantelpolymeren kleiner ist als derjenige des Kernpolymeren. Dabei werden die bromhaltigen Monomeren bevorzugt eingesetzt.

Bevorzugte Ausführungsformen für Lichtwellenleiter mit Kern-Mantel-Struktur sind:

| Kern | Mantel |
|---|---|
| Poly-(methylmethacrylat-co-pentabromphenyl-α-fluoracrylat) | Polymethylmethacrylat |
| Poly-(methylmethacrylat-co-pentachlorphenylmethacrylat) | Polymethylmethacrylat |
| Poly-(pentachlorphenylacrylat) | Poly-(tetrafluor-n-propylmethacrylat-co-pentachlorphenylacrylat) |
| Poly-(tetrafluor-n-propylmethacrylat-co-pentachlorphenylmethacrylat) | Poly-(methylmethacrylat-co-tetrafluor-n-propylmethacrylat) |
| Poly-(styrol-co-pentabromphenylacrylat) | Polystyrol |
| Poly-(methylmethacrylat-co-pentabromphenylmethacrylat) | Poly-(methylmethacrylat-co-pentachlorphenyl-methacrylat) |

Der erfindungsgemäße Lichtwellenleiter wird durch Extrusion eines der genannten Polymeren hergestellt. Er ist meist mit einer Schicht eines Mantel-Polymers umhüllt. Dazu wird bei einem Verfahren das faserförmige Kern-Polymer durch eine Lösung des Mantel-Polymers in einem wasserfreien organischen Lösungsmittel, das das Kern-Polymer im wesentlichen nicht löst, gezogen, und anschließend wird das Lösungsmittel entfernt.

Als Lösungsmittel, das das Kern-Polymer im wesentlichen nicht löst, d.h. gar nicht oder nur sehr schlecht löst, dient insbesondere ein niederes Alkanol, vorzugsweise Methanol, ein niederes Keton, vorzugsweise Aceton, oder ein Essigsäureester eines niederen Alkanols, vorzugsweise Essigsäureethylester oder ein chlorierter Kohlenwasserstoff, vorzugsweise Chloroform. Gegebenenfalls wird das Lösungsmittel in Form eines Gemisches von mehreren der vorgenannten einzelnen Lösungsmittel verwendet. Die Konzentration des Mantel-Polymers in der Lösung beträgt 2 bis 15, vorzugsweise 6 bis 10 Gewichtsprozent.

Die Kern-Polymer-Faser besitzt einen Durchmesser von 0,1 bis 2 mm, vorzugsweise 0,5 bis 1 mm. Zur Beschichtung mit dem Mantel-Polymer wird sie durch die Lösung des Mantel-Polymers geführt, die sich in einem Gefäß befindet, das am Boden eine Kapillaröffnung mit kreisförmigem Querschnitt aufweist; dessen Durchmesser liegt 10 bis 40 Prozent über dem jeweiligen Faserdurchmesser. Unmittelbar nach dem Austritt aus der Kapillaröffnung wird die beschichtete Faser vom anhaftenden Lösungsmittel befreit. Dies erfolgt insbesondere durch Verdampfen bei einer Temperatur von 30 bis 120 °C, vorzugsweise 50 bis 100 °C und einem Druck von 200 bis 1000 mbar, vorzugsweise 800 bis 1000 mbar. Die Dicke des so erhaltenen Mantels beträgt 0,003 bis 0,05 mm, vorzugsweise 0,005 bis 0,02 mm.

Weitere Möglichkeiten zur Herstellung des erfindungsgemäßen Lichtwellenleiters mit Kern-Mantel-Struktur sind

1. Extrusion des Kerns und anschließende Extrusionsbeschichtung mit dem Mantelpolymeren.
2. Coextrusion der Kern- und Mantelkomponenten mit Hilfe eines Extruders und einer Bikomponenten-Spinndüse.
3. Extrusion des Kerns und anschließende Aufbringung des Mantelpolymeren in Form einer Dispersion, Trocknen und Sintern der Dispersion bzw. des Dispersionsfilms.

Der erfindungsgemäße Lichtwellenleiter eignet sich zur Übertragung von Lichtwellen mit einer Wellenlänge von 500 bis 750 nm, vorzugsweise 630 bis 670 nm. Er zeigt eine Dämpfung von höchstens 1500, vorzugsweise höchstens 1000 dB/km. Er zeichnet sich durch eine sehr gute Wärmestandfestigkeit aus und kann deswegen an Orten mit hoher Wärmebelastung, z.B. in Automobilen, eingesetzt werden.

**Beispiel 1:**

Ein Copolymer aus 40 Teilen Methacrylsäuremethylester (MMA) und 60 Teilen Fluoracrylsäurepentabromphenylester (FA/PBP) wurde mit Hilfe eines Extruders zu einem Lichtwellenleiter extrudiert. Von der Lichtintensität, die in eine Stirnfläche des Lichtwellenleiters eingestrahlt wurde, konnten nach 3 m noch 51 %, nach 1 m noch 73 % nachgewiesen werden.

Nach viertägiger Lagerung bei 120 °C und 100 mbar Luftfeuchtigkeit sank die Lichttransmission auf 50 % bei 3 m Fadenlänge ab.

**Beispiel 2:**

Ein Copolymer aus 50 Teilen MMA und 50 Teilen Methacrylsäure-pentabromphenylester wurde zu einem Draht von 0,9 mm Durchmesser extrudiert und durch eine Lösung von 10 Gew. Teilen Poly-(methacrylsäuremethylester-comethacrylsäure-pentachlorphenylester) in 90 Gew. Teilen eines Gemisches aus Essigsäureethylester und Chloroform gezogen. Der Durchmesser der zu einer Kapillare ausgezogenen unteren Öffnung des Gefäßes mit der Polymerlösung betrug 1,1 mm. Der beschichtete Draht wurde durch ein auf 50 °C beheiztes Rohr geführt, wo ihm ein Strom trockenen, filtrierten Stickstoffs mit 0,4 m/s entgegenströmte, und dabei getrocknet.
Von der in diesen Lichtwellenleiter eingestrahlten Lichtintensiät konnten nach 1 m noch 71 %, nach 3 m noch 47 % nachgewiesen werden. Nach viertägiger Lagerung bei 120 °C und 100 mbar Luftfeuchtigkeit blieb die Lichttransmission durch einen 3 Meter langen Lichtwellenleiter unverändert.

**Beispiel 3:**

Nach dem Verfahren in Beispiel 2 wurde ein Draht aus Poly(acrylsäure-pentachlorphenylester) mit einer Lösung eines Copolymeren aus Methacrylsäure-2,2,3,3-tetrafluor-n-propylester und Acrylsäurepentachlorphenylester in Aceton/Trichlortrifluorethan beschichtet. Die Lichttransmission dieses Lichtwellenleiters betrug 70 % nach 1 Meter, 45 % nach 3 Meter Länge. Nach viertägiger Lagerung bei 120°C und 100 mbar Luftfeuchtigkeit sank die Lichttransmission auf 42 % nach 3 Metern Länge ab.

**Beispiel 4:**

Ein Copolmer aus 31 Gew. Teilen Methylmethacrylat und 69 Gew. Teilen Methacrylsäure-pentachlorphenylester als Kernmaterial wurde zusammen mit Polymethylmethacrylat als Mantel mit Hilfe einer Zwei-Komponenten-Extrusionsanlage und einer Bikomponenten-Spinndüse zu einem Lichtwellenleiter mit Kern-Mantel-Struktur extrudiert. Die Lichttransmission dieses Lichtwellenleiters betrug 74 % nach 1 Meter und 52 % nach 3 Metern.
Nach viertägiger Lagerung bei 120°C und 100 mbar Luftfeuchtigkeit betrug die Transmission noch 50 % nach 3 Metern.

**Vergleichsbeispiel:**

Ein drei Meter langes Stück eines Lichtwellenleiters aus Polymethylmethacrylat zeigte zu Beginn des Experiments eine Lichtdurchlässigkeit von 70 %. Bereits nach dreistündiger Lagerung bei 120°C war die Länge der Faser um 20 % geschrumpft und die Lichtdurchlässigkeit auf 10 % der eingestrahlten Lichtintensität gesunken.

**Patentansprüche**

1. Faserförmiger Lichtwellenleiter bestehend aus einem transparenten thermoplastischen Kunststoff, dadurch gekennzeichnet, daß der Kunststoff ein Polymer ist, das im wesentlichen Einheiten enthält, die sich von einem Ester der Formel (I) ableiten,

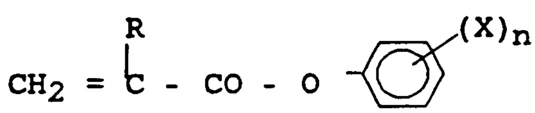

(I)

in der R ein Wasserstoffatom, ein Fluoratom oder eine Methylgruppe, X ein Chloratom oder ein Bromatom und n eine ganze Zahl von 1 bis 5 bedeuten.

2. Lichtwellenleiter, der eine Kern/Mantel-Struktur aufweist, wobei Kern und Mantel aus einem transparenten, thermoplastichen Kunststoff bestehen und wobei der Brechungsindex des Kernmaterials größer ist als der des Mantelmaterials, dadurch gekennzeichnet, daß das Kernmaterial oder das Mantelmaterial oder beide ein Polymer gemäß Anspruch 1 ist/sind.

3. Lichtwellenleiter nach Anspruch 1, dadurch gekennzeichnet, daß der Kunststoff ein Polymer ist, das zu mindestens 50 Gewichtsprozent aus Einheiten besteht, die sich von einem Ester gemäß Anspruch 1 ableiten.

4. Lichtwellenleiter nach Anspruch 2, dadurch gekennzeichnet, daß der Kunststoff ein Polymer ist, das zu mindestens 50 Gewichtsprozent aus Einheiten besteht, die sich von einem Ester gemäß Anspruch 1 ableiten.

**Claims**

1. A fibrous optical waveguide, composed of a transparent thermoplastic, wherein the plastic is a polymer which contains essentially units derived from an ester of the formula (I)

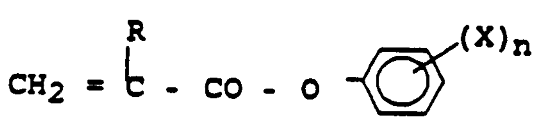

(I)

in which R is a hydrogen atom, a fluorine atom or a methyl group, X is a chlorine atom or a bromine atom and n is an integer from 1 to 5.

**2.** An optical waveguide which has a core/sheath structure, the core and sheath being composed of a transparent thermoplastic and the refractive index of the core material being greater than that of the sheath material, wherein the core material or the sheath material or both is/are a polymer as claimed in claim 1.

**3.** An optical waveguide as claimed in claim 1, wherein the plastic is a polymer comprising at least 50 per cent by weight of units derived from an ester as claimed in claim 1.

**4.** An optical waveguide as claimed in claim 2, wherein the plastic is a polymer comprising at least 50 per cent by weight of units derived from an ester as claimed in claim 1.

## Revendications

**1.** Guide d'ondes lumineuses ayant la forme d'une fibre, en une matière thermoplastique transparente, guide d'ondes caractérisé en ce que la matière plastique est un polymère contenant essentiellement des motifs dérivant d'un ester répondant à la formule I :

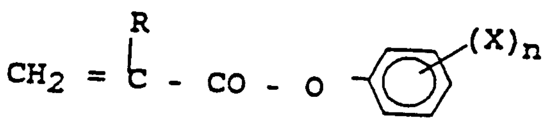

(1)

dans laquelle R représente un atome d'hydrogène, un atome de fluor ou un radical méthyle, X représente un atome de chlore ou un atome de brome et n désigne un nombre entier de 1 à 5.

**2.** Guide d'ondes lumineuses présentant une structure à âme et à enveloppe, l'âme et l'enveloppe étant en une matière thermoplastique transparente et l'indice de réfraction du matériau de l'âme étant supérieur à celui du matériau de l'enveloppe, guide d'ondes caractérisé en ce que le matériau de l'âme ou celui de l'enveloppe ou les deux est ou sont un polymère selon la revendication 1.

**3.** Guide d'ondes lumineuses selon la revendication 1, caractérisé en ce que la matière plastique est un polymère constitué, pour au moins 50 % en poids, de motifs dérivant d'un ester selon la revendication 1.

**4.** Guide d'ondes lumineuses selon la revendication 2, caractérisé en ce que la matière plastique est un polymère constitué, pour au moins 50 % en poids, de motifs dérivant d'un ester selon la revendication 1.